Europäisches Patentamt

European Patent Office

Office européen des brevets

(19)

(11) Numéro de publication: **0 171 124**
**A1**

(12) **DEMANDE DE BREVET EUROPEEN**

(21) Numéro de dépôt: **85201269.9**

(22) Date de dépôt: **05.08.85**

(51) Int. Cl.⁴: **B 60 P 1/44**

(30) Priorité: **07.08.84 NL 8402442**

(43) Date de publication de la demande: **12.02.86**
**Bulletin 86/7**

(84) Etats contractants désignés: **BE DE FR GB NL**

(71) Demandeur: **Van Asselt, Christiaan, Ridderweg 36,
NL-7345 EC Wenum-Wiesel (NL)**

(72) Inventeur: **Van Asselt, Christiaan, Ridderweg 36,
NL-7345 EC Wenum-Wiesel (NL)**

(74) Mandataire: **van der Beek, George Frans et al,
Nederlandsch Octrooibureau Johan de Wittlaan 15 P.O.
Box 29720, NL-2502 LS 's-Gravenhage (NL)**

(54) **Trappe de chargement et de déchargement destinée particulièrement à une camion pourvu d'un plancher de chargement.**

(57) Trappe de chargement et de déchargement destinée particulièrement à un camion pourvu d'un plancher de chargement (1), constitutée d'une plate-forme (3), qui est solidarisée basculante à l'aide d'au moins un parallélogramme articulé (5, 6) á un châssis de support (4) monté sur le camion. La dite plate-forme (3) est constitue d'un panneau d'épaisseur uniforme relativement faible, sur lequel est fixé à l'arrière, un bras vertical (9), afin de créer deux points (10, 11) qui sont situés l'un au-dessus de l'autre et sur lesquels les autres extrémités des barres (5, 6) du parallélogramme articulé sont solidérisées pivotantes, et la barre supérieure (5) du parallélogramme articulé est munie de moyens (12) par lesquels la longueur de cette barre peut être modifiée.

EP 0 171 124 A1

L'invention est relative à une trappe de chargement et de déchargement destinée particulièrement à un camion pourvu d'un plancher de chargement, constituée d'une plate-forme, qui est solidarisée basculante à l'aide d'au moins un parallélogramme articulé à un châssis de support monté sur le camion, lequel parallélogramme est formé de deux barres disposées l'une au-dessus de l'autre à une distance déterminée, lesquelles sont à une extrémité, assemblées pivotantes au châssis de support en des points superposés et à l'autre extrémité, assemblées pivotantes avec la partie marginale de la plate-forme dirigée vers le camion en deux points disposés l'un au-dessus de l'autre à une distance déterminée, l'une de ces barres comprenant des moyens, en particulier un assemblage piston-cylindre par lequel la longueur de cette barre est réglable et un assemblage vérin-piston étant prévu, qui est relié pivotant d'un côté avec le châssis du support et de l'autre côté, relié pivotant au voisinage de la plate-forme, avec essentiellement la barre de longueur invariable du parallélogramme articulé, l'un et l'autre de manière telle que la plate-forme en position de rangement se trouve relevée en position sensiblement verticale avec la partie marginale arrière sensiblement adjacente au plancher de chargement par la commande de l'assemblage du piston-cylindre au cours de laquelle la longueur de la barre correspondante est prolongée jusqu'à finalement une

0171124

longueur égale à la longueur de l'autre barre et les deux barres viennent s'étendre parallèlement l'une à l'autre.

Une trappe de chargement et de déchargement de ce type est connue par le brevet allemand N° 1916203.

Dans la trappe de chargement et de déchargement connue, la plate-forme a une section cunéiforme, de sorte que la face supérieure et la face inférieure de la plate-forme concourent l'une vers l'autre du côté de la partie frontale, en s'éloignant du camion. Lors de l'abaissement de la plate-forme jusqu'au sol, la surface supérieure de celle-ci est horizontale, de sorte que la partie avant de la plate-forme se trouve encore à une certaine distance du sol, alors que la plate-forme touche le sol. Une charge destinée à être amenée dans le camion, devrait alors être soulevée, ce qui est particulièrement fâcheux. C'est pourquoi l'assemblage du piston-cylindre inséré dans la barre inférieure du parallélogramme articulé est réalisé de telle manière que, dans la plate-forme susdite se trouvant en position au sol, le piston puisse effectuer un à-coup supplémentaire, relativement court vers l'intérieur du cylindre, par lequel la plate-forme qui est solidarisée de manière pivotante au parallélogramme articulé, tournera quelque peu jusqu'à reposer sur le sol par sa face inférieure. Dès lors la charge peut être acheminée par glissement ou roulement directement sur la plate-forme.

L'inconvénient du dispositif connu réside dans le fait que l'assemblage piston-cylindre inséré dans la barre inférieure du parallélogramme articulé est relativement compliquée et sujette de ce fait aux pannes, parce que deux mouvements de la plate-forme distincts entre eux doivent se réaliser.

En outre, la face supérieure de la plate-forme s'élève obliquement à partir de la partie frontale, lorsque la plate-forme repose sur le sol, de sorte qu'une charge amenée par roulement sur la plate-forme doit être bloquée avant que celle-ci ne puisse être déchargée.

L'invention vise à créer une trappe de chargement et de déchargement qui ne présente pas les inconvénients précités.

Ce but est atteint par le fait que dans le dispositif selon l'invention, la plate-forme est constituée d'un panneau d'épaisseur uniforme relativement faible, sur lequel est fixé à l'arrière un bras vertical, afin de créer les deux points susdits qui sont situés l'un au-dessus de l'autre et sur lesquels les autres extrémités susdites des barres du parallélogramme articulé sont solidarisées pivotantes et la barre supérieure du parallélogramme articulé est munie de moyens par lesquels la longueur de cette barre peut être modifiée.

Dans cette forme de réalisation de la trappe de chargement et de déchargement, la plate-forme vient directement se poser à plat sur le sol, lors de l'abaissement de la plate-forme au moyen du vérin, la face supérieure de la plate-forme étant horizontale.

Le bras vertical est avantageusement formé d'un organe plat qui se dresse sensiblement à l'aplomb du bord arrière de la plate-forme, ledit organe comprenant une partie supérieure en saillie de la plate-forme et une partie inférieure située au-dessous de la plate-forme, qui est reliée par des cordons de soudure au panneau de la plate-forme et au bord latéral d'un profil en U qui est prévu sur la face inférieure du panneau de la plate-forme et qui s'étend sensiblement entre le bord avant et le bord arrière de celui-ci, les ailes du profil en U sont contiguës par leurs extrémités libres au panneau de la plate-forme et ainsi fixés par soudure.

De préférence, la partie supérieure de l'organe de forme aplatie a sensiblement la forme d'un triangle rectangle et la partie inférieure la forme d'un trapèze droit renversé dans lequel la base du triangle rectangle coïncide avec le côté le plus long des côtés parallèles du trapèze, le côté de l'angle droit du triangle rectangle s'étend dans le prolongement du côté de l'angle droit de la plate-forme et l'hypoténuse du triangle droit et le côté incliné du trapèze forment un angle, la partie en forme de trapèze est adjacent au bord latéral du profil U et est fixée par soudure à ce côté latéral au moins le long du côté incliné et fixée par soudure au panneau de la plate-forme le long du côté allongé susdit.

Dans une forme de construction d'une plate-forme réalisée de cette manière, les tensions qui prennent naissance dans les soudures à la suite des mouvements de flexion, restent de loin inférieures aux contraintes

5  0171124

maximales admissibles lors du soulèvement ou de l'abaissement de charges présentant le poids usuel le plus élevé pour des camions.

De préférence, le vérin est articulé au châssis de support en un point qui est situé au-dessus des points où les barres du parallélogramme articulé sont articulées au châssis de support, de sorte que, dans la position de rangement de la plate-forme tous les assemblages piston-cylindres se trouvent en position rétractée.

Dans le dispositif connu, une disposition analogue du vérin n'est pas possible, parce que le cylindre relativement long du piston viendrait buter en position de repli contre le bord inférieur du plancher de chargement du camion.

On a noté qu'une plate-forme de chargement et de déchargement pour camions est connue par le brevet français N° 1586935, selon lequel la plate-forme est constituée d'un panneau d'épaisseur uniforme relativement faible. Cependant, aucun parallélogramme articulé n'y est appliqué, mais un assemblage relativement compliqué de barres pivotantes et un vérin, tandis qu'en outre, la plate-forme ne peut pas être relevée en position de rangement.

L'invention est décrite plus en détail en faisant référence aux dessins dans lesquels :

- les figures 1, 2 et 3 illustrent schématiquement une trappe de chargement et de déchargement dans trois positions différentes ;

0171124

- la figure 4 est une vue en plan de la plate-forme ;

- la figure 5 montre à plus grande échelle et debout, une partie de la plate-forme selon la figure 4, et la figure 6 représente cette partie en élévation latérale.

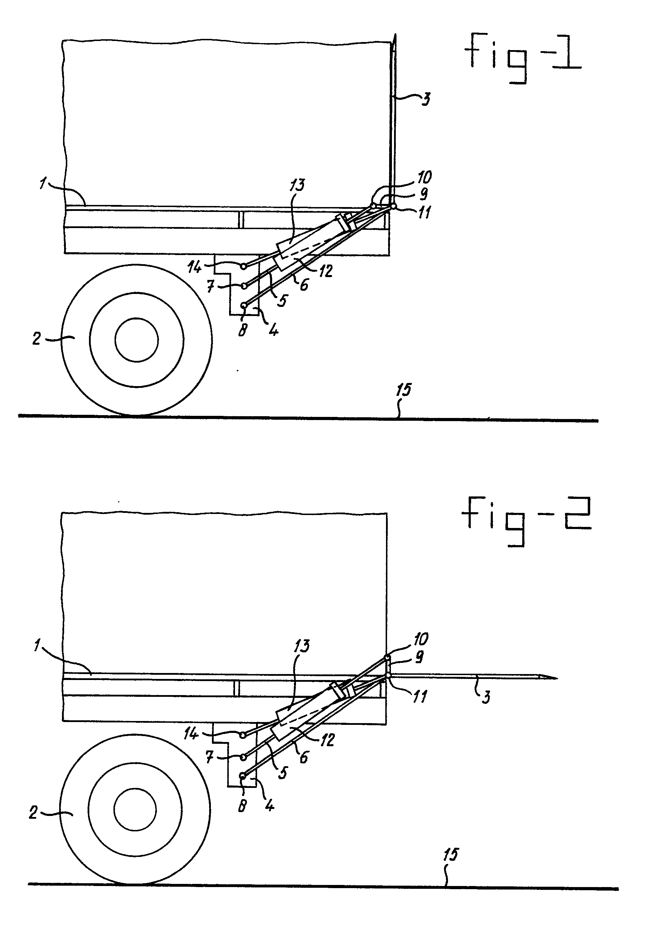

Comme illustré à la figure 1, une trappe de chargement et de déchargement, constitué d'une plate-forme 3 solidarisée à l'aide de deux parallélogrammes articulés basculants au châssis-support 4 montés sur le camion, est montée à la partie arrière d'un camion pourvu d'un plancher de chargement 1 et de roues arrière 2.

Chaque parallélogramme articulé est formé d'une barre supérieure 5 et d'une barre inférieure 6, lesquelles barres sont articulées en 7 et 8 au châssis support 4. A l'autre extrémité, les barres 5 et 6 sont articulées respectivement aux points 10 et 11 à un bras vertical 9 monté sur la plate-forme 3. Dans la barre 5 est inséré un assemblage piston-cylindre, par lequel la longueur de la barre 5 peut être modifiée. Ensuite, un assemblage vérin-piston 13 est aménagé qui d'un côté au voisinage du point 14, au-dessus des points d'articulation 7 et 8, est relié au châssis-support 4, et à l'autre côté au voisinage immédiat est articulé près du point 11 avec la plate-forme 3.

A la figure 1, la plate-forme 3 est disposée en position de rangement, cela signifie que la plate-forme

7

0171124

s'étend vers le haut verticalement en étant adjacent à la partie postérieure du plancher de chargement.

A partir de la position montrée à la figure 1, la plate-forme 3 peut être rabattue autour du point 11 vers la position horizontale montrée à la figure 2, en étirant l'assemblage piston-cylindre 12, par lequel la longueur de la barre 5 croît jusqu'à une longueur égale à celle de barre 6 et les barres 5 et 6 forment un simple parallélogramme articulé.

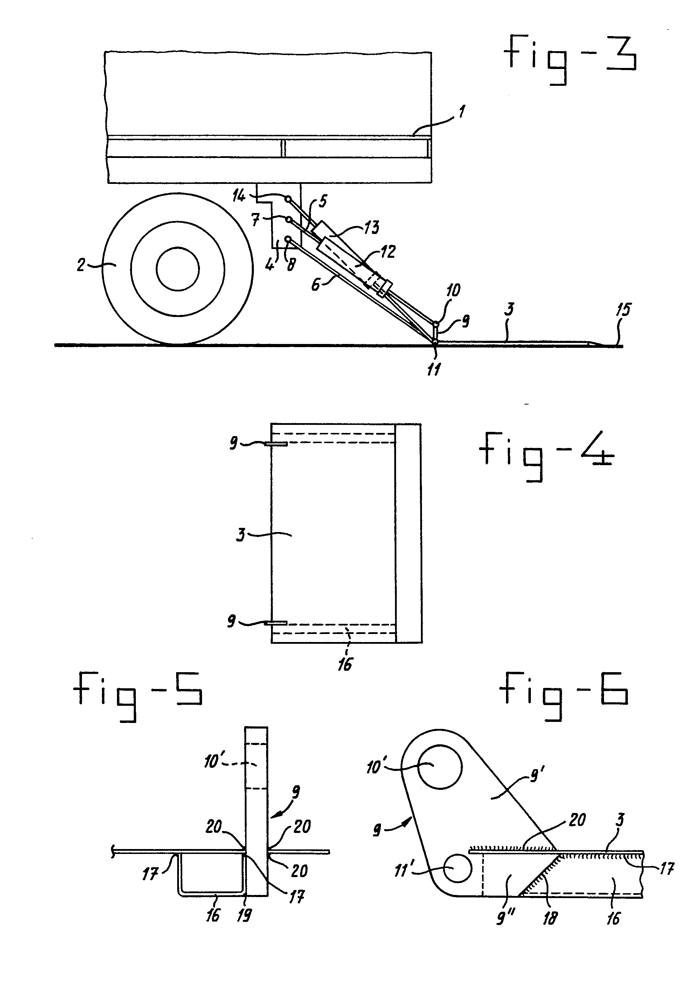

Ensuite, la plate-forme 3 peut être rabattue de la position montrée à la figure 2, jusqu'au sol 15, comme montré à la figure 3, en étirant le piston dans le vérin 13. La plate-forme 3, qui est constituée d'un pa nneau d'épaisseur uniforme relativement faible, se dépose directement à plat sur le sol 15, de sorte qu'une charge peut être amenée sur la plate-forme 3 par glissement ou roulement.

Ensuite, la plate-forme 3 portant la charge est amenée vers la position illustrée à la figure 2, en aspirant le piston dans le vérin 13, après quoi la charge peut être conduite de la plate-forme 3 vers le plancher de chargement 1.

Après que le camion soit chargé ou déchargé, la plate-forme peut être remise en position de rangement, montré à la figure 1. Dans cette position de rangement de la plate-forme, les pistons des assemblages piston-cylindres 12 et 13 se trouvent en position rétractée.

Comme illustré dans les figures 4, 5 et 6, les bras 9 sont formés d'appendices plans en forme d'oreille pourvus d'orifices 10' et 11' pour former les points d'articulation 10 respectivement 11. Chaque plat 9 est repris partiellement dans un évidement ménagé dans le panneau de la plate-forme 3, de sorte que le panneau 9 comprenne une partie 9' généralement triangulaire, dépassant en saillie le panneau de la plate-forme 3 et une partie 9" de forme généralement trapézoïdale rectangle, disposé en saillie en-dessous du panneau de la plate-forme 3.

Sur la face inférieure du panneau de la plate-forme 3 sont fixés des profils en U 16 qui sont fixés chacun par les cordons de soudure 17 au panneau 3. En outre, chaque plaque 9 est fixée au côté latéral du profil en U correspondant par la soudure inclinée 18 et le cordon de soudure 19 et par les cordons de soudure 20 au panneau de la plate-forme 3.

REVENDICATIONS

1. Trappe de chargement et de déchargement destinée particulièrement à un camion pourvu d'un plancher de chargement (1), constituée d'une plate-forme (3), qui est solidarisée basculante à l'aide d'au moins un parallélogramme articulé à un châssis de support monté sur le camion, lequel parallélogramme est formé de deux barres (5, 6) disposées l'une au-dessus de l'autre à une distance déterminée, lesquelles sont à une extrémité, assemblées pivotantes au châssis de support (4) en des points (7,8) superposés et à l'autre extrémité, assemblées pivotantes avec la partie marginale de la plate-forme (3) dirigée vers le camion en deux points disposés l'un au-dessus de l'autre à une distance déterminée, l'une de ces barres (5) comprenant des moyens, en particulier un assemblage piston-cylindre (12) par lequel la longueur de cette barre (5) est réglable et un assemblage vérin-piston (13) étant prévu, qui est relié pivotant d'un côté avec le châssis de support (4)  ' et de l'autre côté, relié pivotant au voisinage de la plate-forme (3) avec essentiellement la barre (6) de longueur invariable du parallélogramme articulé, l'un et l'autre de manière telle que la plate-forme (3) en position de rangement se trouve relevée en position sensiblement verticale avec la partie marginale arrière sensiblement adjacente au plancher de chargement (1), par la commande de l'assemblage du piston-cylindre (13) au cours de laquelle la longueur de la barre (5) correspondante est prolongée jusqu'à finalement une longueur égale à la longueur de l'autre barre (6), et les deux barres (5,6) viennent à s'étendre parallèlement l'une à l'autre, la plate-forme (3) en position sensiblement horizontale pouvant être rabattue de sorte que la surface supérieure de la plate-forme (3) se trouve dans le prolongement du plancher de chargement (1) et par la commande du vérin (13) la plate-forme (3) peut être ramenée vers la position de rangement, caractérisée en ce que la plate-forme (3) est constituée d'un panneau d'épaisseur uniforme relativement faible, sur lequel est fixé à l'arrière, un bras vertical (9), afin de créer les deux points susdits (10,11) qui sont situés l'un au-dessus de l'autre et sur lesquels les autres extrémités susdites des barres (5,6) du parallélogramme articulé sont solidérisées pivotantes, et la barre supérieure (5) du parallélogramme articulé est munie de moyens par lesquels la longueur de cette barre peut être modifiée.

2. Trappe de chargement et de déchargemenet selon la revendication 1, caractérisée en ce que le bras vertical (9) est formé d'un organe de forme aplatie qui se dresse sensiblement à l'aplomb du bord arrière de la plate-forme (3), ledit organe comprenant une partie supérieure en saillie de la plate-forme (3),* qui est reliée par des cordons de soudure (18, 19, 20) au panneau de la plate-forme (3) et au bord latéral d'un profil en U (16) qui est prévu sur la face inférieure du panneau (3) de la plate-forme (3) et qui s'étend sensiblement entre le bord avant et le bord arrière de celui-ci, les ailes du profil en U (16) sont contiguës par leurs extrémités libres au panneau de la plate-forme (3) et ainsi fixées par soudure.

* et une partie inférieure située au-dessous de la plate-forme

3. Trappe de chargement et de déchargement selon la revendication 2, caractérisée en ce que la partie supérieure de l'organe de forme aplatie a sensiblement la forme d'un triangle rectangle (9') et la partie inférieure la forme d'un trapèze droit renversé (9"), dans lequel la base du triangle rectangle coïncide avec le côté le plus long des côtés parallèles du trapèze, le côté de l'angle droit du triangle rectangle s'étend dans le prolongement du côté de l'angle droit de la plate-forme (3) et l'hypoténuse du triangle droit et le côté incliné du trapèze (9") forment un angle, la partie en forme de trapèze est adjacente au bord latéral du profil U (6) et est fixée par soudure (18) à ce côté latéral au moins le long du côté incliné et fixée par soudure au panneau de la plate-forme (3) le long du côté allongé susdit.

4. Trappe de chargement et de déchargement selon l'une des revendications 2 ou 3, caractérisée en ce que l'organe de forme aplatie est reprise au moins partiellement dans un évidement en forme de rainure, ménagé à la partie arrière du panneau de la plate-forme et en ce que la partie inférieure de l'organe de forme aplatie est fixé à ses deux côtés par des cordons de soudure (20) au panneau de la plate-forme (3).

5. Trappe de chargement et de déchargement selon l'une quelconque des revendications 1 à 4, caractérisé en ce que le vérin (13) est articulé au châssis de support (4) en un point (14) qui est situé au-dessus des points (7,8) où les barres (5,6) du parallélogramme articulé sont articulés au châssis de support (4).

fig-1

1

3

13

10
9
11

14
7
8
5
6
12
4

2

15

fig-2

1

13

10
9
11
3

14
7
8
5
6
12
4

2

15

Fig-3

Fig-4

Fig-5

Fig-6

Office européen
des brevets

**RAPPORT DE RECHERCHE EUROPEENNE**

0171124
Numero de la demande

EP  85 20 1269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-3 065 869  (MATHERS) <br> * Figure 1 * | 1,4 | B 60 P    1/44 |
| A | DE-A-3 027 646  (WIELOCH) <br> * Figures 2-4 * | 1,2 | |
| A | WO-A-8 401 751  (SVANBERG) <br> * Figure 1 * | 1 | |
| A | DE-A-2 824 889  (DANTEL) <br> * Figure 6 * | 4 | |
| A | FR-A-1 586 935  (DUSSER) | | |
| P,A | EP-A-0 131 871  (FALK) <br> * Figure 4 * | 1 | **DOMAINES TECHNIQUES RECHERCHES (Int. Cl.4)** <br><br> B 60 P    1/44 |

Le présent rapport de recherche a été établi pour toutes les revendications

| Lieu de la recherche | Date d'achèvement de la recherche | Examinateur |
|---|---|---|
| LA HAYE | 27-09-1985 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82